# EUROPEAN PATENT SPECIFICATION

(11) **EP 1 902 810 B1**
(45) Date of publication and mention of the grant of the patent: **30.11.2011**
(21) Application number: 07015992.6
(22) Date of filing: 14.08.2007
(51) Int. Cl.: B23K 20/12

(54) **Friction stir spot welding method**
Reibrührschweissverfahren zum Punktschweissen
Procédé de soudage par point par friction-malaxage

(30) Priority: 19.09.2006 JP 2006252314
(43) Date of publication of application: 26.03.2008
(73) Proprietor: Mazda Motor Corporation, Aki-gun, Hiroshima 730-8670 (JP)
(72) Inventor: Gendou, Toshiyuki, Aki-gun, Hiroshima 730-8670 (JP)
(74) Representative: Müller-Boré & Partner Patentanwälte

(56) References cited:
- EP-A- 1 375 050
- EP-A- 1 498 210
- JP-A- 2002 210 564
- JP-A- 2006 021 217

## Description

The present invention relates to a friction spot joining method.

### Background Art

As a method of spot-joining a plurality of steel plates overlaid in the thickness direction thereof as a work piece used for, for example, a car body of an automobile, a resistance spot welding method has been well known conventionally in which a to-be-joined part of the plurality of overlaid steel plates is clipped between copper electrodes and are conducted to generate resistance heat by the conduction so that the to-be-joined part is joined by the resistance heat.

As steel plates for car bodies, mild steel has been employed up to now while there is a growing trend toward employment of high-tensile steel for weight reduction of automobiles.

In the above method, however, if three or more to-be-joined steel plates including a mild steel plate and a high-tensile steel plate have different inherent resistances, it is difficult to attain a desired nugget. These materials have previously been joined by laser welding, see JP-A-2004 082 797.

Recently, a friction spot joining method was proposed as a method of spot-joining a plurality of aluminum plates overlaid in the thickness direction thereof. In the proposed method, the plurality of aluminum plates are overlaid and a rotary tool is rotated and allowed to press a to-be-joined part of the plural overlaid aluminum plates for generating frictional heat to cause plastic flow at the to-be-joined part, thereby spot-joining the to-be-joined part in a solid state.

The friction spot joining method attains a desired nugget irrespective of the inherent resistances of the to-be-joined plates and is accordingly applicable to joining of a plurality of steel plates, such as the above case where three or more steel plates including a mild steel plate and a high-tensile steel plate are joined together. Referring to Japanese Patent Application Laid Open Publication No. 2006-21217, for example, a plurality of steel plates are overlaid, laser light is irradiated at a to-be-joined part of a plurality of overlaid steel plates, and a rotary tool is rotated and allowed to press the to-be-joined part thereof to generate frictional heat for causing plastic flow at the to-be-joined part, thereby friction-spot-joining the to-be-joined part. Herein, the laser light is irradiated to the to-be-joined part of the steel plates in order to suppress wear of the rotary tool.

EP- A-1 375 050 describes a machining control method for controlling a processing operation in which a rotary tool and a stationary tool are used for friction welding of two work pieces.

JP-A-2002 210 564 discloses a method for welding a coated plate with a non-coated plate in which a positive and a negative electrodes are applied on the non-coated plate for performing spot welding.

### Summary of the Invention

### Problems that the Invention is to Solve

In general, the outer plate for a car body must have high corrosion resistance, and therefore, metal-coated steel plates are used as the outer plate usually. In joining such a metal-coated steel plate and a non-coated steel plate by the aforementioned friction spot joining method, when the rotary tool is rotated and allowed to press the to-be-joined part of the overlaid steel plates from the metal-coated steel plate side, the rotary tool will slip on the metal coating having a small friction coefficient to generate less frictional heat, thereby elongating time required for joining. Besides, when the rotary tool is rotated and allowed to press it from the metal-coated steel plate side, the metal coating will be melted and evaporated to lower the corrosion resistance of the metal-coated steel plate.

The present invention has been made in view of the foregoing and has its object of suppressing lowering of the corrosion resistance of a metal-coated steel plate while suppressing elongation of time required for joining in a friction spot joining method.

### Means for Solving the Problems

A first aspect of the present invention provides a friction spot joining method in which a plurality of steel plates are overlaid and a to-be-joined part of the plurality of overlaid steel plates is friction-spot-joined in a solid state by causing plastic flow at the to-be-joined part by frictional heat generated by rotating a rotary tool and allowing it to press the to-be-joined part, comprising the steps of: preparing, as the plurality of steel plates, at least one non-coated high tensile steel plate and at least one metal-coated mild steel plate; overlaying the plurality of steel plates in such a fashion that one of two of the steel plates located on both sides in an overlaying direction serves as the non-coated hiah-tensile steel plate and the other serves as the metal-coated mild steel plate; and rotating the rotary tool and allowing it to press the to-be-joined part of the plurality of overlaid steel plates from the non-coated steel plate side, thereby thrusting the rotary tool into the metal-coated mild steel plate located on one side in the overlaying direction.

Thus, the plurality of steel plates are overlaid in such a fashion that at least one of the two steel plates located on the respective sides in the overlaying direction is the first non-coated steel plate, and the rotary tool is rotated and allowed to press the to-be-joined part of the plurality of overlaid steel plates from the first non-coated steel plate side, so that the rotary tool hardly slips to promote generation of frictional heat. Accordingly, elongation of time required for joining is suppressed. Further, rotation and pressing of the rotary tool from the first non-coated steel plate side less melts and evaporates the low-melting-point metal coating intervening between the steel plates. Accordingly, lowering of the corrosion resistance of the second metal-coated steel plate is suppressed. In consequence, lowering of the corrosion resistance of the metal-coated steel plate is suppressed while elongation of time required for joining is suppressed.

Also, in the above aspect, the rotary tool is rotated and allowed to press the to-be-ioined part of the Plurality of steel plates from the non-coated hiah-tensile steel plate side, which has high material strength and less plastic flowability, so that sufficient plastic flow is caused at the to-be-ioined part of the hiah-tensile steel plate. This results in an increase in joint strength between the non-coated high-tensile steel plate and the metal-coated mild steel plate.

A second aspect of the present invention is the friction spot joining method of the first aspect, the method further including the steps of: preparing a receiving member having a diameter larger than a diameter of a shoulder part of the rotary tool; and allowing the receiving member to receive the to-be-joined part of the plurality of the overlaid steel plates in such a fashion that the metal-coated mild steel plate is set against the receiving member,

In the above aspect, a member having a diameter larger than the shoulder part of the rotary tool is prepared; the plurality of steel plates are overlaid in such a fashion that one of the two steel plates located on the respective sides in the overlaying direction is the first non-coated steel plate while the other is the second metal-coated steel plate; the receiving member is allowed to receive the to-be-joined part of the plurality of overlaid steel plates in such a fashion that the second metal-coated steel plate is set against the receiving member; and then, the rotary tool is rotated and allowed to press the to-be-joined part from the first non-coated steel plate side. This releases frictional heat from the receiving member, so that the metal coating of the second steel plate on the side against the receiving member is further less melted and evaporated. Hence, lowering of the corrosion resistance of the second metal-coated steel plate is suppressed definitely.

A third aspect of the present invention is the friction spot joining method of one of the above aspects, wherein in the steel plates preparing step, one non-coated high-tensile steel plate and one metal-coated mild steel plates are prepared as the plurality of steel plates.

Accordingly, the joint strength between the one non-coated high-tensile steel plate and the one metal-coated mild steel plate increases.

A fourth aspect of the present invention is the friction spot joining method of the third aspect, wherein the non-coated high-tensile steel plate is used as an inner plate for a car body, and the metal-coated mild steel plate is used as an outer plate for the car body.

Accordingly, the joint strength between the one non-coated high-tensile steel plate used for a car body and the one metal-coated mild steel plate used for the car body increases. Further, any dimple, which has been formed by rotation and pressing by the rotary tool, is not formed in the outer face of the metal-coated mild steel plate used as an outer plate for a car body, thereby securing the appearance of the car body.

A fifth aspect of the present invention is the friction spot joining method of the first or second aspects, wherein in the steel plates preparing step, two non-coated high-tensile steel plates and one metal-coated mild steel plate are prepared as the plurality of metal plates, and in the overlaying step, the two non-coated high-tensile plates and the one metal-coated mild steel plate are overlaid in this order.

Accordingly, the joint strength between the two non-coated high-tensile steel plates and the one metal-coated mild steel plate increases.

A sixth aspect of the present invention is the friction spot joining method of the fifth aspect, wherein the two non-coated high-tensile steel plates are used as an inner plate and a reinforcing plate for a car body, respectively, and the one metal-coated mild steel plate is used as an outer plate for the car body.

This increase the joint strength between the two non-coated high-tensile steel plates used for a car body and the one metal-coated mild steel plate used for the car body. Further, any dimple, which has been formed by rotation and pressing by the rotary tool, is not formed in the outer face of the metal-coated mild steel plate used as an outer plate for a car body, thereby securing the appearance of the car body.

### Effects of the Invention

In the present invention, a plurality of steel plates are overlaid in such a fashion that at least one of the two steel plates located on the respective sides in the overlaying direction is the first non-coated steel plate, and the rotary tool is rotated and allowed to press the to-be-joined part of the plurality of overlaid steel plates from the first non-coated steel plate side, so that the rotary tool hardly slips to promote generation of frictional heat, thereby suppressing elongation of time required for joining. Further, rotation and pressing of the rotary tool from the first non-coated steel plate less melts and evaporates the low-melting-point metal coating intervening between the steel plates, thereby suppressing lowering of the corrosion resistance of the second metal-coated steel plate. Hence, both suppression of elongation of time required for joining and suppression of lowering of the corrosion resistance of the metal-coated steel plate are achieved.

### Brief Description of the Drawings

FIG. **1** is a schematic diagram showing a construction of a joining gun used in one embodiment of the present invention.
FIG.**2** shows a process of friction-spot-joining a work piece by the joining gun, wherein FIG. **2A** is a diagram showing a state in which a rotary tool starts rotating; FIG. **2B** is a diagram showing a state in which the rotary tool is thrust into a second steel plate;
FIG. **2C** is a diagram showing a state in which the rotary tool is thrust into a third steel plate; and FIG. **2D** is a diagram showing a state in which the rotary tool is pulled out from the work piece.
FIG. **3** is a list indicating compositions of a first steel plate in Working Examples and Comparative Examples.
FIG. **4** is a diagram showing a friction spot joining of a work piece by the joining gun in Working Examples.
FIG. **5** is a diagram showing a friction spot joining of a work piece by the joining gun in Comparative Examples.
FIG. **6** is a list indicating joining conditions in friction spot joining of a work piece by the joining gun, the tensile shearing strengths of joints, and evaluation results in Working Examples and Comparative Examples.
FIG. **7** is a graph showing the tensile shearing strengths of the joints in Working Examples.
FIG. **8** is a graph showing the tensile shearing strengths of the joints in Comparative Examples.
FIG. **9** is a diagram showing a modified example of the rotary tool.
FIG. **10** is a diagram showing another modified example of the rotary tool.

### Description of the Preferred Embodiments

Embodiments of the present invention will be described below in detail with reference to the accompanying drawings.

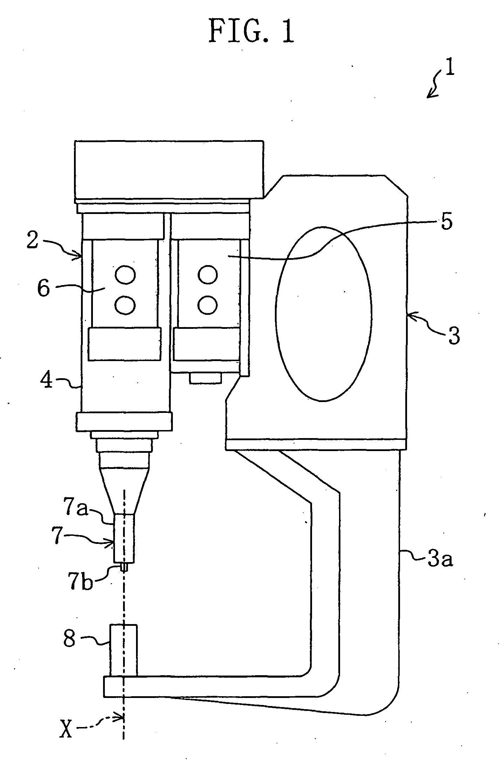

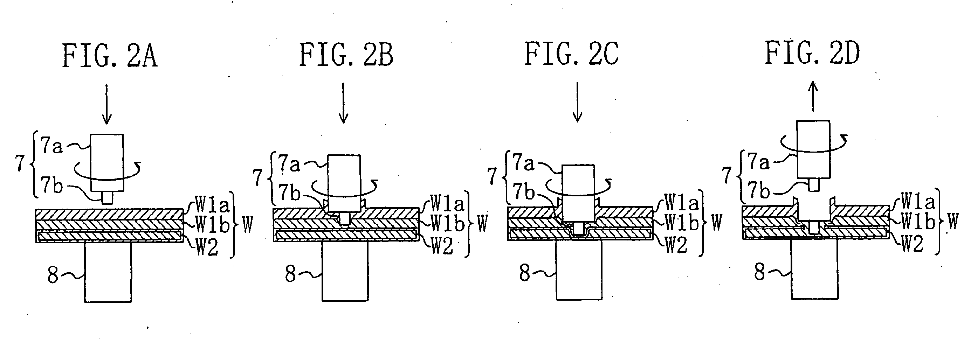

FIG. **1** is a schematic diagram showing a construction of a joining gun **1** in the present embodiment. As shown in FIG. **1****,** the joining gun **1** includes a joining unit **2** as a friction spot joining apparatus and a gripping frame **3** mounted at, for example, a wrist of a robot (not shown). The joining gun **1** spot-joins, in a solid sate (a state in which each steel plate **W1, W2** (see FIG. **2**) are not melted), a plurality of steel plates **W1, W2** of a work piece **W** used for a car body of an automobile in such a fashion that the plurality of steel plates **W1, W2** are overlaid at least partially in the thickness direction. In the present embodiment, the steel plate **W1** includes two first non-coated steel plates **W1a, W1b,** and the steel plate **W2** is one second metal-coated steel plate. The first steel plates **W1a, W1b** are made of high-tensile steel having a tensile strength of 340 MPa or larger while the second steel plate **W2** is made of mild steel having a tensile strength smaller than 340 MPa. The two first steel plates **W1a, W1b** are used as an inner plate and a reinforcing plate for a car body while the one second steel plate **W2** is used as an outer plate for the car body.

The joining unit **2** includes an apparatus body **4,** a pressing shaft motor **5,** and a rotary shaft motor **6.** Below the apparatus body **4,** a rotary tool **7** is mounted. The rotary tool **7** includes a cylindrical shoulder part **7a** and a cylindrical pin **7b** protruding downward from the central part at the bottom of the shoulder part **7a** and having a diameter smaller than that of the shoulder part **7a.** The rotary tool **7** is rotated around the rotation axis **X** by the rotary shaft motor **6** and is moved up and down in the direction of the rotation axis **X** by the pressing shaft motor **5.** The pressing shaft motor **5** and the rotary shaft motor 6 are connected to a control board (not shown) that controls them.

At the end of an arm **3a** in an L-shape in section of the gripping frame **3,** a metal-made (steel-made) cylindrical receiving member **8** is mounted. To-be-joined part of the work piece **W** is clipped between the rotary tool **7** and the receiving member **8.** The diameter of the receiving member **8** is set larger than the diameter of the shoulder part **7a** of the rotary tool **7.**

### (Process of friction-spot-joining work piece by joining gun)

Description will be given below with reference to FIG. **2** to a process of friction-spot-joining the work piece **W** by the joining gun **1.**

First, as shown in FIG. **2A****,** the second metal-coated steel plate W2 and the first non-coated steel plates **W1b, W1a** are overlaid in this order to form the work piece **W,** and the receiving member **8** is allowed to receive the to-be-joined part of the work piece **W** with the second steel plate **W2** of the work piece **W** set against the receiving member **8.** In other words, the three steel plates **W1a, W1b, W2** are overlaid on the receiving member **8** in a state in which one (the upper one) of two steel plates located on the respective sides in the overlaying direction (vertical direction in **FIG.2**) is the first steel plate **W1a** while the other (the lower one in FIG. **2**) is the second plate **W2**.

Next, when the rotary shaft motor **6** (see **FIG.1**) is driven, the rotary tool **7** is rotated around the rotation axis **X** (see FIG. **1**).

After the number of rotation of the rotary tool **7** reaches a target number of rotation, the pressing shaft motor **5** (see FIG. **1**) is driven with the rotary tool **7** rotated to move the rotary tool **7** downward.

In this way, the pressing shaft motor **5** is driven to move the rotary tool **7** downward until the pin **7b** is in contact with the surface of the work piece **W**, that is, the surface of the first non-coated steel plate **W1a.** Whereby, the to-be-joined part of the work piece **W** is clipped between the rotary tool **7** and the receiving member **8** and are pressed in the direction of the rotation axis X (downward in FIG. **2**). This causes friction between the rotating rotary tool **7** and the surface of the first steel plate **W1a** to generate frictional heat. The thus generated frictional heat is transferred from the first steel plate **W1a** to the first steel plate **W1b** and then to the second steel plate **W2** to soften the first steel plate **W1b** and the second steel plate **W2.**

When the rotation and pressing of the rotary tool **7** is continued, as shown in FIG. **2B** and FIG. **2C****,** plastic flow is caused in the first and second steel plates **W1a, W1b,** and **W2.** The frictional heat is released from the receiving member **8** having the diameter larger than the diameter of the shoulder part **7a.**

After the plastic flow is allowed to be generated in the work piece **W** for a predetermined period of time, the pressing shaft motor **5** is reversed to raise the rotating rotary tool **7** with the rotary tool **7** rotated, so that the rotary tool **7** is pulled out from the work **W**, as shown in FIG. **2D****.**

Thereafter, the work piece **W** is cooled (left for cooling) to be hardened, thereby completing joining of the work piece **W.**

It is noted that the pressure and the number of rotation of the rotary tool **7** and the joining period are set in the above joining process so that the to-be-joined part of the work piece **W** does not reach a temperature at which the steel plates **W1, W2** are melted by frictional heat, for example, so that it reaches a temperature at which an austenitic structure is generated.

### <Working Examples>

Working Examples of the present invention will be described below.

### (Joining unit)

A stationary pressure unit having a servo motor as the pressure shaft motor was employed as the joining unit.

A ceramic-made rotary tool was used as the rotary tool. The diameter of the shoulder part of the rotary tool was 10 mm. The diameter and the length of the pin of the rotary tool were 3 mm and 1.27 mm, respectively.

### (Steel plates)

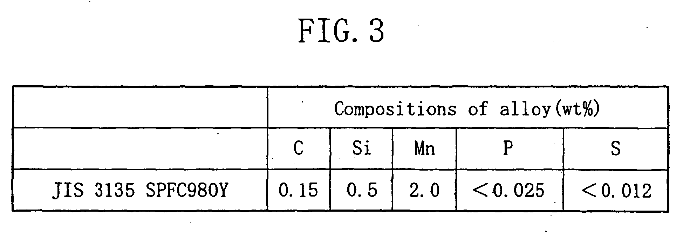

High-tensile steel plates (JIS 3135 SPFC980Y) on a 980 MPa level having a thickness of 1.0 mm were used as the first steel plates. The compositions of the first steel plates are indicated in FIG. **3****.**

A mild steel plate on a 270 MPa level was used as the second steel plate. The second steel plate was zinc-coated and was subjected to an alloying process to obtain a galvaneal steel plate having a coating weight of 55 g/m² and a thickness of 0.7 mm. The melting point of the alloyed hot dip zinc coating, which depends on the content ratio of zinc to iron, is within the range between 530 and 600 °C.

### (Joining)

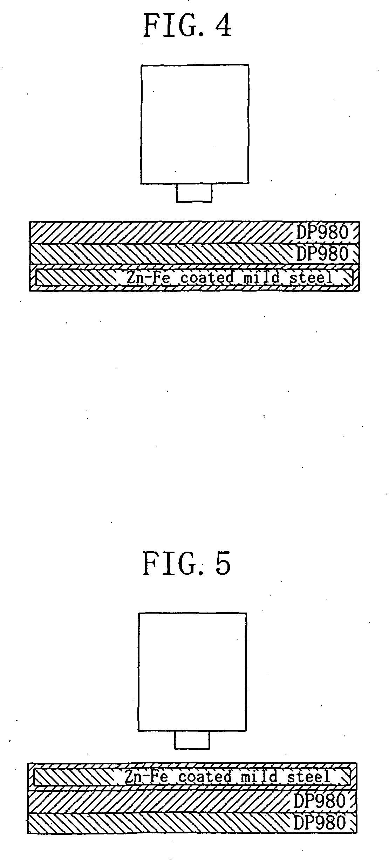

In Working Examples 1 and 2, one galvaneal steel plate (Zn-Fe coated mild steel plate) and two high-tensile steel plates (DP980) were overlaid in this order to form a work piece, as shown in FIG. **4****,** and the rotary tool was rotated and allowed to press the to-be-joined part of the work piece from above to friction-spot-join the to-be-joined part. The to-be-joined part of the work piece at joining was heated up to the temperature at which an austenite structure is generated by the frictional heat.

In Comparative Examples 1, 2, and 3, two high-tensile steel plates and one galvaneal steel plate were overlaid in this order to form a work piece, as shown in FIG. 5, and the rotary tool was rotated and allowed to press the to-be-joined part of the work piece from above to friction-spot-join the to-be-joined part. The to-be-joined part of the work piece at joining was heated up to the temperature at which an austenite structure is generated by the frictional heat, likewise Working Examples.

### (Joining conditions)

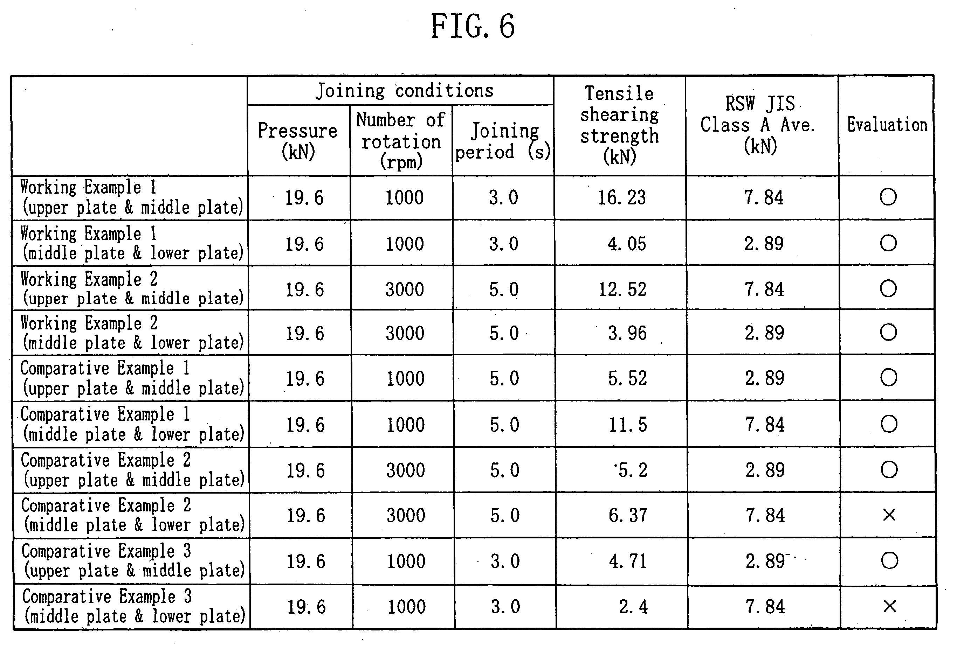

As indicated in FIG. **6****,** the pressure and the number of rotation of the rotary tool were set to 19.6 kN and 1000 rpm, respectively, and the joining period was set to 3.0 s in Working Example 1.

In Working Example 2, the pressure and the number of rotation of the rotary tool were set to 19.6 kN and 3000 rpm, respectively, and the joining period was set to 5.0 s.

In Comparative Example 1, the pressure and the number of rotation of the rotary tool were set to 19.6 kN and 1000 rpm, respectively, and the joining period was set to 5.0 s.

In Comparative Example 2, the pressure and the number of rotation of the rotary tool were set to 19.6 kN and 3000 rpm, respectively, and the joining period was set to 5.0 s.

In Comparative Example 3, the pressure and the number of rotation of the rotary tool were set to 19.6 kN and 1000 rpm, respectively, and the joining period was set to 3.0 s.

### (Test)

A tensile strength test was performed on each joint between the upper plates and the middle plates and each joint between the middle plates and the lower plates of the work pieces after joining, and the tensile shearing strength of each joint is measured.

### (Evaluation)

Evaluation was made by comparing the tensile shearing strengths of the joints with the resistance spot welding JIS class A average values (hereinafter referred to as RSW JIS class A average values) concerning the conventional resistance spot welding.

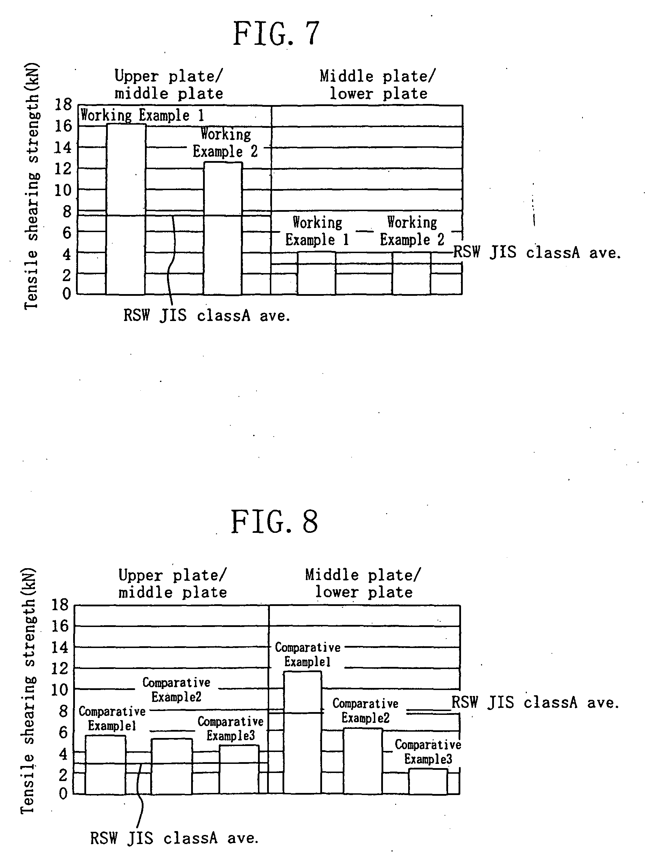

In Working Examples 1 and 2, all the tensile shearing strengths at the respective joints were larger than the respective RSW JIS class A average values, as indicated in FIG. 6 and FIG. 7.

In contrast, as indicated in FIG. **6** and FIG. **8****,** though all the tensile shearing strengths at the respective joint parts were larger than the respective RSW JIS class A average values in Comparative Example 1, the tensile shearing strength of the joint between the upper plate and the middle plate was larger than but that of the joint between the middle plate and the lower plate was smaller than the respective RSW JIS class A average values in Comparative Example 2. Specifically, in Comparative Example 2, the tensile shearing strength of the to-be-joined part between the high-tensile steel plates was smaller than the corresponding RSW JIS class A average values. Similarly to Comparative Example 2, the tensile shearing strength of the to-be-joined part between the middle plate and the lower plate was smaller than the corresponding RSW JIS class A average values in Comparative Example 3.

### (Effects)

As described above, in the present embodiment, the plurality of steel plates **W1a, W1b, W2** are overlaid in such a fashion that at least one of the two steel plates located on the respective sides in the overlaying direction is the first steel plate **W1a,** and the rotary tool 7 is rotated and allowed to press the to-be-joined part of the overlaid plural steel plates **W1a, W1b, W2** from the first non-coated steel plate **W1a** side. Accordingly, the rotary tool **7** hardly slips and frictional heat is readily generated, thereby suppressing elongation of time required for joining. Further, rotation and pressing of the rotary tool 7 from the first non-coated steel plate **W1a** side less melts and evaporates the low-melting-point metal coating intervening between the steel plates **W1** and **W2,** thereby suppressing lowering of the corrosion resistance of the second metal-coated steel plate **W2**. Thus, both elongation of time required for joining and lowering of the corrosion resistance of the metal-coated steel plate **W2** are suppressed.

Moreover, the following arrangement achieves release of the frictional heat from the receiving member **8.** Namely: the receiving member **8** is prepared which has a diameter larger than the shoulder part **7a** of the rotary tool **7;** the plurality of steel plates **W1a, W1b, W2** are overlaid in such a fashion that one of the two steel plates located on the respective sides in the overlaying direction is the first non-coated steel plate **W1a** while the other is the second metal-coated steel plate **W2**; the receiving member **8** is allowed to receive the to-be-joined part of the plurality of overlaid steel plates **W1a, W1b, W2** in such a fashion that the second metal-coated steel plate **W2** is set against the receiving member **8;** and the rotary tool **7** is rotated and allowed to press the to-be-joined part from the first non-coated steel plate **W1a** side. Release of the frictional heat results in further less melting and evaporation of the metal coating of the second steel plate **W2** on the side against the receiving member **8,** thereby suppressing lowering of the corrosion resistance of the second metal-coated steel plate **W2** definitely.

Furthermore, the rotary tool **7** is rotated and allowed to press the to-be-joined part of the plurality of overlaid steel plates **W1a, W1b, W2** from the non-coated high-tensile steel plate **W1a** side, which has high material strength and less plastic flowability, so as to cause sufficient plastic flow at the to-be-joined part of the high-tensile steel plate **W1a.** This increases the joint strength between the non-coated high-tensile steel plates **W1a, W1b** and the metal-coated mild steel plate **W2.**

As well, the joint strength among the two non-coated high-tensile steel plates **W1a, W1b** used for a car body and the one metal-coated mild steel plate **W2** used for the car body can be increased. In addition, any dimple (see FIG. **2**), which has been formed by the rotation and pressing of the rotary tool **7,** is not formed in the outer face of the metal-coated mild steel plate **W2** used as an outer plate for a car body, thereby securing the appearance of the car body.

### <Other Embodiments>

In the above embodiment, the work piece **W** is used for a car body of an automobile, but may be used for any other article.

The work piece **W** is composed of the two first steel plates **W1a, W1b** and the one second steel plate **W2** in the above embodiment, but the present invention is not limited thereto. The number of the first steel plates **W1** may be one or plural, and the number of the second steel plates **W2** may be one or plural as well. For example, the work piece W may be composed of one first steel plate **W1** and one second steel plate **W2.** In this case, the first steel plate **W1** and the second steel plate **W2** are used as an inner plate and outer plate for a car body, respectively.

In the above embodiment, the three steel plates **W1a, W1b, W2** are overlaid in such a fashion that one of the two steel plates located on the respective sides in the overlaying direction is the first steel plate **W1a** while the other is the second steel plate **W2.** The present invention only requires an arrangement in which the plurality of steel plates **W1, W2** are overlaid in such a fashion that at least one of the two steel plates located on the respective sides in the overlaying direction is the first steel plate **W1** so that the rotating rotary tool **7** presses the to-be-joined part of the plurality of overlaid steel plates **W1, W2** from the first steel plate **W1** side.

Further, the diameter of the receiving member **7** is set larger than the diameter of the shoulder part **7a** of the rotary tool **7** in the above embodiment, but may be set equal to or smaller than that of the shoulder part **7a** thereof.

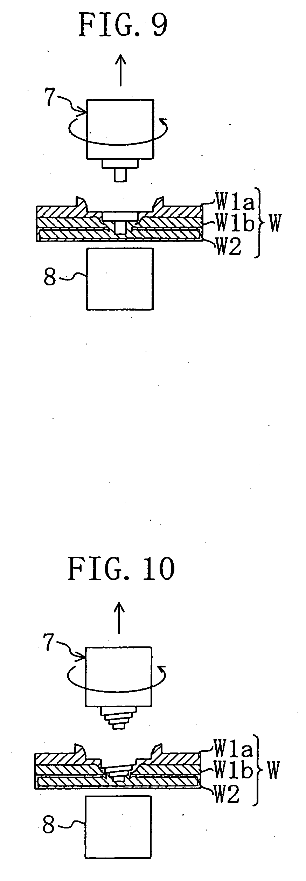

In the above embodiment, the rotary tool **7** includes the shoulder part **7a** and the pin **7b.** The present invention is not limited thereto, and the shoulder part **7a** may have two stages as shown in FIG. **9** or may be formed in a helical form as shown in FIG. **10****.**

The present invention is not limited to the embodiments, and any other different embodiments may be made without departing from the scope of the appended claims.

The above embodiments are mere preferred examples in every aspect and should not be construed definitely. The scope of the invention is to be determined by the following claims, and the description imposes no constraint on the present invention.

### Industrial Applicability

As described above, the friction spot joining method in accordance with the present invention is applicable to fields necessitating suppression of both elongation of time required for joining and lowering of the corrosion resistance of a metal-coated steel plate.

## Claims

1. A friction spot joining method in which a plurality of steel plates (**W**) are overlaid and a to-be-joined part of the plurality of overlaid steel plates (**W**) is friction-spot-joined in a solid state by causing plastic flow at the to-be-joined part by frictional heat generated by rotating a rotary tool (**7**) and allowing it to press the to-be-joined part, comprising the steps of:
preparing, as the plurality of steel plate, at least one non-coated high tensile steel plate (**W1**) and at least one metal-coated mild steel plate (**W2**);
overlaying the plurality of steel plates in such a fashion that one of two of the steel plates located on both sides in an overlaying direction serves as the non-coated high-tensile steel plate (W1) and the other serves as the metal-coated mild steel plate (W2) ; and
rotating the rotary tool (**7**) and allowing it to press the to-be-joined part of the plurality of overlaid steel plates from the non-coated steel plate side (**W1**), thereby thrusting the rotary tool (7) into the metal-coated mild steel plate (W2) located on one side in the overlaying direction.

2. The friction spot joining method of Claim 1,
the method further comprising the steps of:
preparing a receiving member (**8**) having a diameter larger than a diameter of a shoulder part (**7a**) of the rotary tool (**7**); and
allowing the receiving member (**7**) to receive the to-be-joined part of the plurality of the overlaid steel plates in such a fashion that the metal-coated mild steel plate (**W2**) is set against the receiving member (**8**).

3. The friction spot joining method of Claim 1 or 2,
wherein in the steel plates preparing step, one non-coated high-tensile steel plate (**W1**) and one metal-coated mild steel plate (**W2**) are prepared as the plurality of steel plates.

4. The friction spot joining method of Claim 3,
wherein the non-coated high-tensile steel plate (**W1**) is used as an inner plate for a car body, and
the metal-coated mild steel plate (**W2**) is used as an outer plate for the car body.

5. The friction spot joining method of Claim 1 or 2,
wherein in the steel plates preparing step, two non-coated high-tensile steel plates (**W1**) and one metal-coated mild steel plate (**W2**) are prepared as the plurality of metal plates, and
in the overlaying step, the two non-coated high-tensile plates (**W1**) and the one metal-coated mild steel plate (**W2**) are overlaid in this order.

6. The friction spot joining method of Claim 5,
wherein the two non-coated high-tensile steel plates (**W1**) are used as an inner plate and a reinforcing plate for a car body, respectively, and
the one metal-coated mild steel plate (**W2**) is used as an outer plate for the car body.

## Patentansprüche

1. Reibpunktverbindungs- bzw. fügeverfahren, bei dem eine Mehrzahl von Stahlplatten (W) überlagert werden und ein zu verbindender bzw. zu fügender Teil der Mehrzahl überlagerter Stahlplatten (W) in einem festen Zustand reibpunktverbunden bzw. -gefügt wird, indem plastisches Fließen an dem zu fügenden Teil durch Reibungswärme bewirkt wird, die durch Drehen eines Rotationswerkzeugs (7) erzeugt wird und diesem erlaubt, den zu fügenden Teil zu pressen, umfassend die Schritte:
Vorbereiten, als die Mehrzahl von Stahlplatten, zumindest einer nicht beschichteten hochfesten Stahlplatte (W1) und zumindest einer metallbeschichteten Weich- bzw. Flussstahlplatte (W2);
Überlagern der Mehrzahl von Stahlplatten auf eine solche Weise, dass eine der beiden Stahlplatten, die sich auf beiden Seiten in einer Überlagerungsrichtung befinden, als die nicht beschichtete hochfeste Stahlplatte (W1) dient und die andere als die metallbeschichtete Weich- bzw. Flussstahlplatte (W2) dient; und
Drehen des Rotationswerkzeugs (7) und Erlauben, dass dieses den zu fügenden Teil der Mehrzahl überlagerter Stahlplatten von der Seite der nicht beschichteten Stahlplatte (W1) aus presst, wodurch das Rotationswerkzeug (7) in die metallbeschichtete Weich- bzw. Flussstahlplatte (W2) gedrückt wird, die sich auf einer Seite in der Überlagerungsrichtung befindet.

2. Reibpunktfügeverfahren nach Anspruch 1, wobei das Verfahren ferner die Schritte umfasst:
Vorbereiten eines aufnehmenden Glieds (8) mit einem Durchmesser, der größer ist als ein Durchmesser eines Schulterteils (7a) des Rotationswerkzeugs (7); und
Erlauben, dass das aufnehmende Glied (7) den zu fügenden Teil der Mehrzahl überlagerter Stahlplatten auf eine solche Weise aufnimmt, dass die metallbeschichtete Flussstahlplatte (W2) gegen das aufnehmende Glied (8) gesetzt bzw. gelegt wird.

3. Reibpunktfügeverfahren nach Anspruch 1 oder 2, wobei in dem Stahlplattenvorbereitungsschritt eine nicht beschichtete hochfeste Stahlplatte (W1) und eine metallbeschichtete Flussstahlplatte (W2) als die Mehrzahl von Stahlplatten vorbereitet werden.

4. Reibpunktfügeverfahren nach Anspruch 3,
wobei die nicht beschichtete hochfeste Stahlplatte (W1) als eine Innenplatte für einen Fahrzeugkörper bzw. -aufbau verwendet wird und
die metallbeschichtete Flussstahlplatte (W2) als eine Außenplatte für den Fahrzeugaufbau verwendet wird.

5. Reibpunktfügeverfahren nach Anspruch 1 oder 2,
wobei in dem Stahlplattenvorbereitungsschritt zwei nicht beschichtete hochfeste Stahlplatten (W1) und eine metallbeschichtete Flussstahlplatte (W2) als die Mehrzahl von Stahlplatten vorbereitet werden und
in dem Überlagerungsschritt die beiden nicht beschichteten hochfesten Stahlplatten (W1) und die eine metallbeschichtete Flussstahlplatte (W2) in dieser Reihenfolge überlagert werden.

6. Reibpunktfügeverfahren nach Anspruch 5,
wobei die beiden nicht beschichteten hochfesten Stahlplatten (W1) als eine Innenplatte bzw. eine Verstärkungsplatte für einen Fahrzeugkörper bzw. -aufbau verwendet werden und
die eine metallbeschichtete Flussstahlplatte (W2) als eine Außenplatte für den Fahrzeugaufbau verwendet wird.

## Revendications

1. Procédé de liaison par points par friction dans lequel une pluralité de plaques d'acier (W) sont recouvertes et une partie devant être reliée de la pluralité de plaques d'acier recouvertes (W) est reliée par points par friction dans un état solide en provoquant un écoulement de plastique au niveau de la partie devant être reliée par chaleur frictionnelle générée en faisant tourner un outil rotatif (7) et lui permettant d'appuyer sur la partie devant être reliée, comprenant les étapes consistant à :
préparer en tant que la pluralité de plaques d'acier au moins une plaque d'acier non enduite hautement extensible (W1) et au moins une plaque d'acier soudable enduite de métal (W2) ;
recouvrir la pluralité de plaques d'acier de telle manière à ce qu'une de deux plaques d'acier situées des deux côtés dans une direction de recouvrement serve de plaque d'acier non enduite hautement extensible (W1) et l'autre serve de plaque d'acier soudable enduite de métal (W2) ; et
faire tourner l'outil rotatif (7) et lui permettre d'appuyer sur la partie devant être reliée de la pluralité de plaques d'acier recouvertes depuis le côté de la plaque d'acier non enduite (WI), poussant de ce fait l'outil rotatif (7) dans la plaque d'acier soudable enduite de métal (W2) située d'un côté dans la direction de recouvrement.

2. Procédé de liaison par points par friction selon la revendication 1,
le procédé comprenant en outre les étapes consistant à :
préparer un élément de réception (8) ayant un diamètre supérieur à un diamètre d'une partie d'épaulement (7a) de l'outil rotatif (7) ; et
permettre à l'élément de réception (7) de recevoir la partie devant être reliée de la pluralité de plaques d'acier recouvertes de telle manière à ce que la plaque d'acier soudable enduite de métal (W2) soit fixée contre l'élément de réception (8).

3. Procédé de liaison par points par friction selon la revendication 1 ou 2, dans lequel dans l'étape de préparation des plaques d'acier, une plaque d'acier non enduite hautement extensible (W1) et une plaque d'acier soudable enduite de métal (W2) sont préparées en tant que la pluralité de plaques d'acier.

4. Procédé de liaison par points par friction selon la revendication 3,
dans lequel la plaque d'acier non enduite hautement extensible (W1) est utilisée comme plaque interne pour une carrosserie de voiture, et
la plaque d'acier soudable enduite de métal (W2) est utilisée comme plaque externe pour la carrosserie de voiture.

5. Procédé de liaison par points par friction selon la revendication 1 ou 2,
dans lequel dans l'étape de préparation des plaques d'acier, deux plaques d'acier non enduites hautement extensibles (W1) et une plaque d'acier soudable enduite de métal (W2) sont préparées en tant que la pluralité de plaques d'acier, et
dans l'étape de recouvrement, les deux plaques d'acier non enduites hautement extensibles (W1) et la plaque d'acier soudable enduite de métal (W2) sont recouvertes dans cet ordre.

6. Procédé de liaison par points par friction selon la revendication 5,
dans lequel les deux plaques d'acier non enduites hautement extensibles (W1) sont utilisées en tant que plaque interne et plaque de renforcement pour une carrosserie de voiture, respectivement, et
la plaque d'acier soudable enduite de métal (W2) est utilisée en tant que plaque externe pour la carrosserie de voiture.
